Europäisches Patentamt

European Patent Office

Office européen des brevets

(11) Publication number: **0 476 510 A1**

## EUROPEAN PATENT APPLICATION

(21) Application number: **91115402.9**

(22) Date of filing: **11.09.91**

(51) Int. Cl.5: **C03C 17/42**

(30) Priority: **17.09.90 JP 243874/90**

(43) Date of publication of application:
**25.03.92 Bulletin 92/13**

(84) Designated Contracting States:
**DE GB**

(71) Applicant: **NISSAN MOTOR COMPANY LIMITED**
**No. 2, Takara-cho, Kanagawa-ku**
**Yokohama-city, Kanagawa-prefecture(JP)**

(72) Inventor: **Uemura, Ryuzo**
**1927-8, Matsuwa, Minamishitaura-Cho**
**Miura City, Kanagawa Pref.(JP)**
Inventor: **Nishide, Toshikazu**
**5-57, Aihara 2-Chome**
**Sagamihara City, Kanagawa Pref.(JP)**

(74) Representative: **TER MEER - MÜLLER - STEINMEISTER & PARTNER**
**Mauerkircherstrasse 45**
**W-8000 München 80(DE)**

(54) **Process for treating glass surface with water repellency.**

(57) Before the treatment of a glass plate with a water repellent, at least one transparent metal oxide film layer is formed on the surface of the glass plate and then rendered into fine unevenness. The thus water repellent treated glass is excellent in the environmental resistance, particularly weather resistance.

## FIG_ 1

EP 0 476 510 A1

This invention relates to a process for treating a surface of a glass used as a window glass for automobile with a water repellent.

As the conventional process for treating the glass with the water repellent, there is disclosed a process wherein an inorganic glass is dipped in a solution comprising polydimethyl siloxane and a liquid hydrocarbon at room temperature and then baked at 250-300°C in, for example, Japanese Patent laid open No. 1-126244.

Furthermore, a silane compound containing polyfluoroalkyl group (Rf group) is used as a surface treating agent for glass as disclosed in Japanese Patent laid open No. 58-122979, No. 58-129082, No. 58-142958, No. 58-147483, No. 58-147484, No. 58-172242, No. 58-172243, No. 58-172244, No. 58-172245, No. 58-172246, No. 58-190840 and No. 58-223634.

In the conventional process for treating the glass with the water repellent, however, the surface of the glass plate is first cleaned and then directly coated with the water repellent, so that the water repellent coated on the glass surface is degraded with the lapse of time in the test for environmental resistance (test for weather resistance) because alkali elutes from the inside of the usual sodium silicate glass. Furthermore, since the glass surface is very smooth, the adhesion area of the glass coated with the water repellent is small and hence the coated water repellent is apt to be peeled off from the glass surface. In any case, the conventional process has such a drawback that the environmental resistance is poor.

It is, therefore, an object of the invention to solve the above problem of the conventional technique in the process for treating the glass surface with the water repellent.

According to the invention, there is the provision of a process for treating a surface of a glass plate with a water repellent, which comprises forming at least one transparent metal oxide film layer on the surface of the glass, rendering the surface of the metal oxide film layer into fine unevenness, and then coating it with a water repellent.

In a preferred embodiment of the invention, a vehicle obtained by hydrolysis and polycondensation of a metal alkoxide in the presence of water, alcohol and a catalyst is coated and baked on the glass surface to form a metal oxide film layer, the surface of which film layer is rendered into fine unevenness and coated with the water repellent. That is, the sol-like vehicle obtained from the metal alkoxide is coated onto the glass surface and baked to form the metal oxide film layer. The surface of the transparent metal oxide film layer prepared by sol-gel method is subjected to a treatment with hydrofluoric acid or a plasma etching, whereby fine unevenness is formed on the metal oxide film layer for the coating of the water repellent.

In case of forming fine unevenness on the surface of the metal oxide film layer, there is preferably used an aqueous solution containing 0.001-1.0% by weight of hydrofluoric acid or a mixed solution with another acid.

The formation of the metal oxide film layer by sol-gel method is, for example, disclosed in M. Yamane, Production Technique of Glass Ceramics by Sol-Gel Method and its Application, Oyogijutsu Shuppan, 1989, pp108-140. For instance, the preparation of sol gel is carried out by dissolving silicon tetramethoxide in alcohol, and adding an acid such as hydrochloric acid or the like, water, a catalyst and a hydrolyzing agent to decompose silicon tetramethoxide to thereby form a sol having Si-O-Si bond. In this case, the resulting solution is applied by an optional method after the viscosity is properly selected to form the film layer. As the application method, there are a dipping method, a spin coating method, a spraying method and the like. Then, the formed film layer is fired. As to the formation of the film layer, a first layer is applied onto the glass plate and then a second layer is applied thereonto directly or after the firing of the first layer. According to the invention, it is important to form at least one metal oxide film layer on the glass plate. As the metallic ion for alcoholate used in the invention, use may be made of any ions forming the alcoholate, but it is preferable to be changed into a transparent film layer after the firing. The metal alkoxide is shown by a general formula of M(OR)n wherein M is a metal, preferably Si, Ti, Al and the like other than alkali metal and alkaline earth metal, and R is an optional alkyl group, preferably methyl group, ethyl group, isopropyl group, propyl group, butyl group or the like. Moreover, any ligand may be added for adjusting the hydrolysis rate of the alcoholate. As the ligand, mention may be made of diketones such as acetylacetone and the like; alcohol ethers such as ethylcellosolve and the like; glycols such as ethylene glycol and the like. Among them, the addition of the glycol is preferable. Particularly, the use of hexylene glycol, 2,3-butane diol, 1,2-propane diol and 2-methyl-1,2-propane diol is favorable.

Even when the metal oxide film layer is formed by a vapor deposition method, similar results are obtained. As the vapor deposition method, there are plasma CVD, sputtering, vacuum evaporation method and the like.

According to the invention, the transparent metal oxide film layer is formed on the surface of the sodium silicate glass before the coating of the water repellent, so that the alkali elusion from the glass is controlled by the metal oxide film layer. Further, since fine unevenness is formed on the surface of the

2

metal oxide film layer, the area to be bonded to the water repellent becomes large and hence the durability after the treatment with the water repellent is considerably improved.

The invention will be described with reference to the accompanying drawings, wherein:

Fig. 1 is a schematically section view of a glass treated with a water repellent in Example 1;

Fig. 2 is a graph showing a relation between thickness of metal oxide film layer and durability;

Fig. 3 is a graph showing a relation between time of plasma etching for metal oxide film layer and durability;

Fig. 4 is a graph showing results evaluated on the durability in the glasses prepared in Examples 1 and 2 and Comparative Example 1; and

Fig. 5 is a graph showing results evaluated on the durability in glasses prepared in Example 3 and Comparative Example 2.

The following examples are given in illustration of the invention and are not intended as limitations thereof.

Example 1

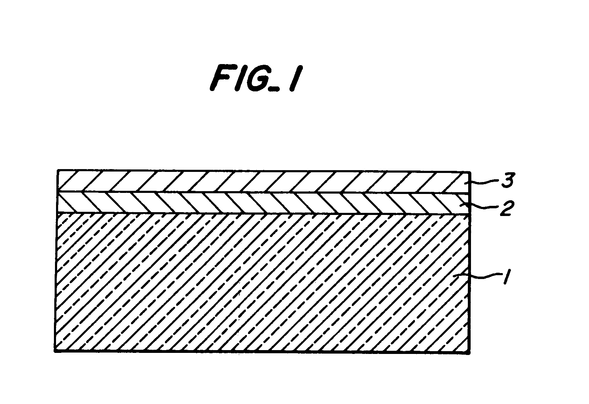

In this example, there was prepared a glass treated with a water repellent as shown in Fig. 1.

At first, a sodium silicate glass 1 used in a sandwich glass for automobile was immersed in a 5% glass cleaning solution (Hikari Ace, trade name, made by Hikari Kogyo Corporation) over a night, fully washed and further washed with pure water and subsequently with ether and then dried to obtain a clean glass plate 1. Separately, a sol-gel coating agent for the formation of $SiO_2$ film was synthesized by dissolving 12.5 mℓ of ethoxysilane and 8 mℓ of hexylene glycol in 50 mℓ of ethanol, reacting them on a water bath at 80°C for 1.5 hours, cooling to 40°, adding 1 mℓ of water and 1.5 mℓ of nitric acid (61% solution) and again heating to 80°C to conduct the reaction for 1.5 hours. The thus synthesized coating agent was placed in a spinner and dropped down on the glass plate 1 in an amount of 2-3 mℓ, which was coated by rotating at 3000 rpm for 30 seconds and set for about 30 minutes. Then, the coated glass was placed in an electric furnace, heated at a heating rate of 8°C/min and baked at 500°C for 30 minutes to form a metal oxide film layer 2 consisting of $SiO_2$ film.

The glass plate 1 provided with the metal oxide film layer 2 was dipped in an aqueous solution of 0.05% by weight of hydrofluoric acid at room temperature for 1 hour, taken out therefrom, fully washed with water, pure water and ether in this order and then dried.

Onto the thus dried glass plate was applied a solution of 3% fluorine-silicone water repellent having polyfluoroalkyl group (KP801, trade name, made by The Shin-Etsu Chemical Co., Ltd.) by flow coating method, which was baked at 150°C for 30 minutes and wiped with a kim wipe (made by Jujo Kimberly Corporation) to remove excessive amount of the water repellent from the surface, whereby a glass having a water repellent treated layer 3 was obtained as a specimen of Example 1.

Example 2

A sodium silicate glass plate was cleaned in the same smaller as in Example 1. On the other hand, a sol-gel coating agent for the formation of metal oxide film layer was prepared by mixing 50 mℓ of ethoxysilane with 50 mℓ of ethanol, adding 4.3 mℓ of water and 5.7 mℓ of nitric acid (61% solution) thereto, thoroughly mixing them, reacting on a water bath at 80°C for 2 hours, cooling and adding ethanol so as to have a total volume of 110 mℓ. The thus obtained sol-gel coating solution was placed in a spinner and dropped down onto the glass plate in an amount of 2-3 mℓ, which was coated by rotating at 3000 rpm for 30 seconds and set for about 30 minutes. Then, it was placed in an electric furnace, heated at a heating rate of 8°C/min and the baked at 500°C for 30 minutes.

The above treated glass plate was set in a plasma CVD device made by Anelva Corporation and subjected to a plasma etching using 10 volume% $O_2$ gas (Ar base) at a plate temperature of 350°C under a power of 200 W, an applied frequency of 13.56 MHz and a pressure of 0.2 Torr for 10 minutes.

On the thus etched surface was applied the same solution of 3% fluorine-silicone water repellent as in Example 1 by flow coating method, which was baked at 140°C for 30 minutes and wiped with a kim wipe to remove excessive amount of the water repellent from the surface, whereby a glass having a water repellent treated layer was obtained as a specimen of Example 2.

Example 3

The same clean glass plate as in Example 1 was set in a plasma CVD device (PED401, made by

EP 0 476 510 A1

Anelva Corporation), and thereafter the inside of the device was deaerated under vacuum and filled with 0.02 volume% of $SiH_4$ gas ($N_2O$ base). Then, the plasma etching was carried out at a plate temperature of 350°C under a power of 200 W, an applied frequency of 13.56 MHz and a pressure of 0.2 Torr for 1 hour. The thus etched glass plate was taken out from the device, dipped in an aqueous solution of 0.05% by weight of hydrofluoric acid at room temperature for 1 hour, fully washed with water, pure water and ether in this order and then dried.

Next, a fluorine-silicone water repellent having polyfluoroalkyl group (TSL-8233, trade name, made by TOSHIBA SILICONE CO., LTD.) was applied thereonto by a dipping method and baked at 120°C for 1 hour, whereby a glass having a water repellent treated layer was obtained as a specimen of Example 3.

Comparative Example 1

Onto the same cleaned glass plate as in Example 1 was directly applied a fluorine-silicone water repellent (KP801, made by The Shin-Etsu Chemical Co., Ltd.) by flow coating method, baked at 140°C for 30 minutes and wiped with a kim wipe to remove excessive amount of the water repellent, whereby a glass having the water repellent treated layer was obtained as a specimen of Comparative Example 1.

Comparative Example 2

Onto the same cleaned glass plate as in Example 1 was directly applied a fluorine-silicone water repellent (TSL-8233, made by TOSHIBA SILICONE CO., LTD.) by dipping method, baked at 120°C for 1 hour, whereby a glass having the water repellent treated layer was obtained as a specimen of Comparative Example 2.

Then, there were examined relation between the layer thickness of the metal oxide film layer according to the invention and the weather resistance, relation between the forming condition of fine unevenness on the metal oxide film layer and the weather resistance.

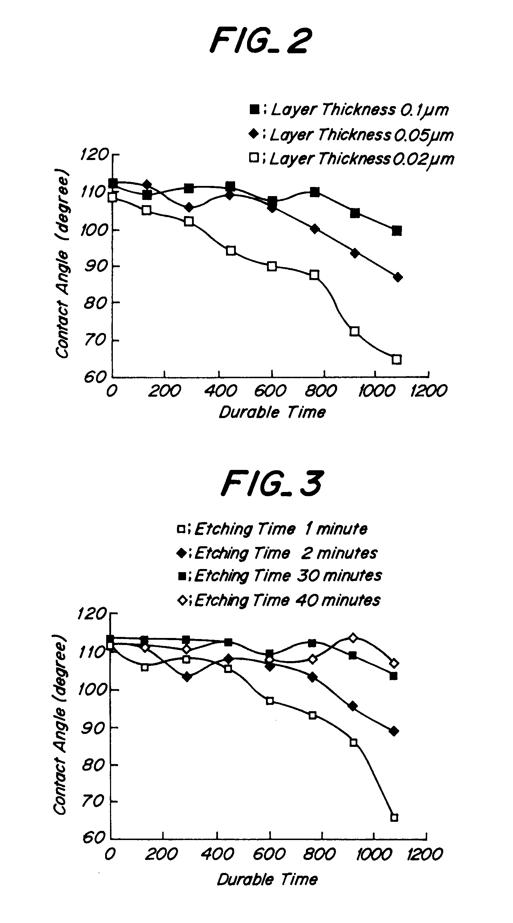

In Fig. 2 are shown results evaluated on the weather resistance when the layer thickness of the metal oxide film layer is changed. The sol-gel coating solution used in Example 1 was diluted with ethanol at weight ratios of 1:1, 1:3 and 1:9 to prepare three diluted coating solutions. Each of these diluted coating solutions was applied onto the glass plate under the same conditions as in Example 1 by means of a spinner to prepare metal oxide film layers having various layer thicknesses, and then subjected to treatment with hydrofluoric acid and treatment with the water repellent in the same manner as in Examples 1. Thereafter, the weather resistance of the glass having the water repellent treated layer was evaluated by indurating the glass in a D.P.W. accelerated weathering test machine made by Suga Shikenki Kabushiki Kaisha and then exposing to water to measure a contact angle of water. The layer thickness was measured by means of a surface roughness meter after a part of the sol-gel coating layer was taken out from the glass surface and then the layer was baked. As a result, when the layer thickness of the metal oxide film layer was not more than 0.02 micron, there was no effect of improving the weather resistance, so that it has been confirmed to have a layer thickness of not less than 0.05 micron.

As the formation of fine unevenness on the metal oxide film layer, there are a wet method using the etching with hydrofluoric acid and a dry method using the plasma etching. In any case, the resulting fine unevenness increases the adhesion area to the water repellent and strengthens the bonding force thereto. The treating conditions using hydrofluoric acid were examined to obtain results as shown in Table 1, in which the appearance of the metal oxide film layer was evaluated by varying the concentration of hydrofluoric acid and the dipping time at room temperature. In this case, there was used the same metallic oxide film layer as in Example 1.

4

Table 1

| Dipping time (minute) Hydro-fluoric acid (weight %) | 1 | 10 | 60 | 120 |
|---|---|---|---|---|
| 0.005 | no effect | no effect | no effect | ○ |
| 0.01 | ○ | ○ | ○ | ○ |
| 0.05 | ○ | ○ | ○ | ○ |
| 0.1 | ○ | ○ | ○ | ○ |
| 0.5 | ○ | ○ | ○ | ○ |
| 1.0 | ○ | ○ | ○ | ○ |
| 2.0 | ○ | white blooming | white blooming | white blooming |

○ : no problem on appearance and bonding force

As seen from Table 1, when the concentration of hydrofluoric acid is not less than 2% by weight, if the dipping time exceeds 10 minutes, the surface is bloomed into white, so that the concentration of hydrofluoric acid is desirable to be not more than 1.0% by weight from a viewpoint of safety level. On the other hand, the treatment with hydrofluoric acid is possible even when the concentration is very low, but it is required to take a very long dipping time, so that the concentration is desirable to be not less than 0.01% by weight. Considering the productivity, the dipping time is favorable to adjust to not more than 60 minutes.

The treating conditions for the plasma etching were examined by subjecting the metal oxide film layer prepared in Example 1 to plasma etching to obtain results as shown in Fig. 3.

In this case, the plasma etching was carried out by using a plasma CVD device PED 401 made by Anelva Corporation and varying the etching time within a range of 1-60 minutes in an atmosphere of 10 volume% of $O_2$ gas (Ar base) under conditions that a power was 200 W, an applied frequency was 13.56 MHz, a pressure was 0.2 Torr and A plate temperature was 300-400°C. After the etching, the same water repellent as in Example 1 was applied and the resulting glass was indurated in the accelerated weathering test machine (gas D.P.W.) and exposed to water to measure a contact angle of water for the evaluation of the weather resistance.

As a result, when the etching time is not more than 1 minute, the improving effect is hardly obtained, while when the etching time is not less than 2 minutes, the improving effect is developed to provide good weather resistance. However, when it exceeds 40 minutes, the white blooming appears, so that it is favorable to be not more than 30 minutes.

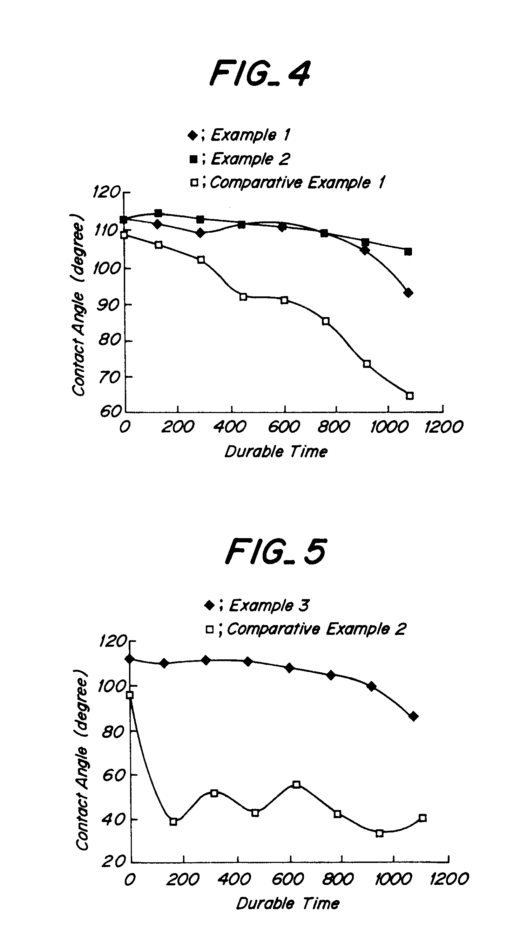

The weathering test was made with respect to the glass plates having the water repellent treated layer of Examples 1-3 and Comparative Examples 1 and 2 to obtain results as shown in Figs. 4 and 5. In this case, the durable time and the contact angle of pure water were measured by using the accelerated weathering test machine (D.P.W.) made by Suga Shikenki Kabushiki Kaisha. Fig. 4 shows the results of Examples 1 and 2 and Comparative Example 1 in the coating of the water repellent (KP801, made by The Shin-Etsu Chemical Co., Ltd,) and Fig. 5 shows the results of Example 3 and Comparative Example 2 using the water repellent (TSL-8233, made by TOSHIBA SILICONE CO., LTD.).

As seen from the above results, the weather resistance can considerably be improved by the process for treating glass with the water repellent according to the invention.

As mentioned above, according to the invention, the metal oxide film layer is formed on the glass surface and is rendered into fine unevenness and the water repellent is applied thereonto, so that the alkali elusion from the glass plate is prevented to improve the durability of the coated water repellent. Furthermore, the surface area to be coated with the water repellent becomes large, so that the falling of the water repellent from the surface is prevented, whereby the weather resistance can considerably be improved.

**Claims**

1. A process for treating a surface of a glass plate with a water repellent, which comprises forming at least one transparent metal oxide film layer on the surface of the glass, rendering the surface of the metal oxide film layer into fine unevenness, and then coating it with a water repellent.

2. The process according to claim 1, wherein said metal oxide film layer is formed by applying a vehicle obtained through hydrolysis and polycondensation of a metal alkoxide in the presence of water, alcohol and a catalyst onto the surface of said glass and then baking it.

3. The process according to claim 2, wherein said metal alkoxide is represented by a general formula of M(OR)n wherein M is a metal selected from Si, Ti and Al other than alkali metal and alkaline earth metal, and R is a methyl group, an ethyl group, an isopropyl group, a propyl group or a butyl group.

4. The process according to claim 1, wherein said fine unevenness is formed by subjecting said metal oxide film layer to an etching treatment with a solution containing 0.001-1.0% by weight of hydrofluoric acid.

5. The process according to claim 1, wherein said fine unevenness is formed by subjecting said metal oxide film layer to a plasma etching.

*FIG_ 1*

# FIG_2

■ ; Layer Thickness 0.1μm
◆ ; Layer Thickness 0.05μm
□ ; Layer Thickness 0.02μm

# FIG_3

□ ; Etching Time 1 minute
◆ ; Etching Time 2 minutes
■ ; Etching Time 30 minutes
◇ ; Etching Time 40 minutes

# FIG_4

◆; Example 1
■; Example 2
□; Comparative Example 1

# FIG_5

◆; Example 3
□; Comparative Example 2

European
Patent Office

EUROPEAN SEARCH
REPORT

Application Number

EP 91 11 5402

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 166 363   (ASAHI GLASS COMPANY)<br>* page 5, line 21 - page 6, line 20; claims * * * page 12, line 26 - page 13, line 5 * * * page 14, line 10 - line 18 * *<br>– – – | 1-4 | C 03 C 17/42 |
| X | DE-A-3 701 654   (SEIKO EPSON CORPORATION)<br>* page 2, line 31 - page 3, line 27; claims * * * page 8, line 57 - line 61; example 3 * *<br>– – – | 1,4,5 | |
| A | GB-A-2 098 089   (EL-CHEM CORPORATION)<br>* page 1, line 6 - line 124 * *<br>– – – – – | 1-3 | |

|  |  |
|---|---|
| | TECHNICAL FIELDS SEARCHED (Int. Cl.5) |
| | C 03 C |

The present search report has been drawn up for all claims

| Place of search | Date of completion of search | Examiner |
|---|---|---|
| The Hague | 26 November 91 | VAN BOMMEL L. |